# EUROPEAN PATENT APPLICATION

(11) **EP 2 378 394 A2**
(43) Date of publication of application: **19.10.2011**
(21) Application number: 11162471.4
(22) Date of filing: 14.04.2011
(51) Int. Cl.: G06F 3/01, G06F 3/03

(54) **User interface device and method for recognizing user interaction using same**

(30) Priority: 15.04.2010 KR 20100034644; 22.12.2010 KR 20100132490
(71) Applicant: Electronics and Telecommunications Research Institute, Daejeon 305-350 (KR)
(72) Inventor: Lee, Dong Woo, Daejeon 305-700 (KR); Son, Yong Ki, Daejeon 305-700 (KR); Kim, Baesun, Daejeon 305-700 (KR); Cho, Il Yeon, Daejeon 305-700 (KR); Jeong, Hyun Tae, Daejeon 305-700 (KR); Lim, Jeong Mook, Daejeon 305-700 (KR); Shin, Hee Sook, Daejeon 305-700 (KR)
(74) Representative: Betten & Resch

(57) **Abstract**

A user interface device includes a frame replacement unit configured to replace a frame of an input image signal by a pattern frame at a frame time; a projector module configured to project an image of the image signal with the pattern frame onto a target; an image acquisition unit configured to capture a pattern image of the pattern frame from the image projected onto the target; and an image recognition unit configured to recognize a user interaction by using the captured pattern image.

## Description

### Field of the Invention

The present invention relates to a user interface, and more particularly, to a user interface device and a method for recognizing a user interaction using the same.

### Background of the Invention

In line with the recent development of technology, as a small-sized projector and camera are mounted on a mobile device, the small-sized projector and camera is becoming more and more applicable.

In addition, a prototype projection system for providing various services is developed in such a manner that a user can wear a small-sized projector and camera around the neck or on a shoulder and a wearable projection system which can be carried portably is being developed as well.

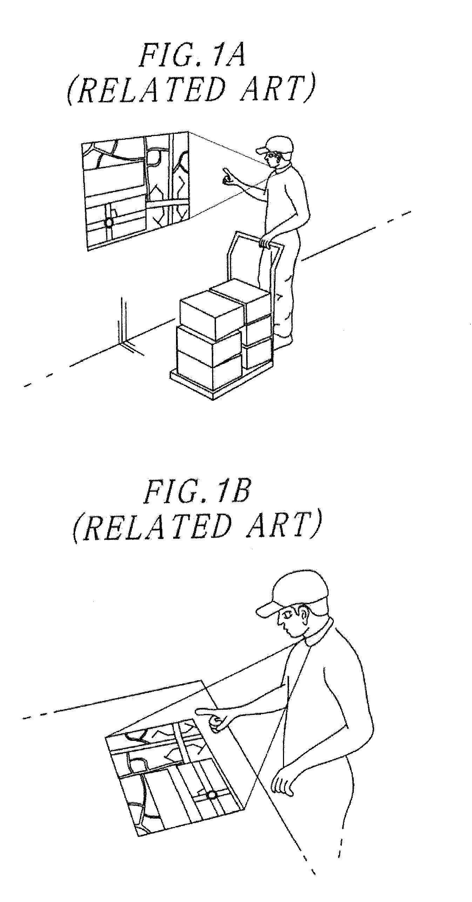

Figs. 1A and 1B illustrate how to recognize a user interaction using a wearable projection system in which a projector and a camera are incorporated in accordance with to a related art. In the projection system, it is very important to sense and recognize a user interaction such as a user event occurred in an image projected from the projection system.

Meanwhile, for efficient user interaction in a mobile environment, it is needed to project an image on the palm or on a flat table and do interactions by using a finger or tool on the projected image. In order to perform these processes in a mobile embedded system, a low computational recognition technique is inevitably required.

To achieve the improved performance of interaction recognition through recognition of a user's posture, a tool such as a color marker has been physically worn on a hand or finger of the user. However, this causes an inconvenient for the user to carry the color marker.

To overcome this inconvenience, a technology for interaction with bare hands is also being developed. However, this technology involves recognizing a user interaction by processing a color image captured with a camera. In this case, a high degree of computation is needed to identify the user interaction performed on the color images, thereby requiring a long time to recognize the user interaction, and an embedded system fails to provide a fast response time. In particular, the recognition of a touch operation with a bare finger or tool on an image projected onto a surface of a palm or table is a very difficult technology that requires a large amount of computation.

Moreover, an image projected by the projector should be well matched in brightness, color, focus, and the like, and should be kept without distortion so that a high-quality user interaction recognition can be achieved. To this end, it is necessary to adjust the brightness, color, and focus and precisely match the projected image to a particular space, such as a screen.

### Summary of the Invention

In view of the above, the present invention provides a user interface device and a method for recognizing a user interaction using the same, which allow the user interaction to be processed fast by a low computation.

Further, the present invention provides a user interface device and a method for recognizing a user interaction using the same, which allow fast adjustment of the brightness, color, and focus of an image projected for user interaction.

In accordance with an aspect of the present invention, there is provided a user interface device, which includes: a frame replacement unit configured to replace a frame of an input image signal by a pattern frame at a frame time; a projector module configured to project an image of the image signal with the pattern frame onto a target; an image acquisition unit configured to capture a pattern image of the pattern frame from the image projected onto the target; and an image recognition unit configured to recognize a user interaction using the captured pattern image.

In accordance with a second aspect of the present invention, there is provided a user interface device, which includes: a projector module configured to project an image onto a target; a pattern image generator configured to generate a laser beam having a pattern through diffraction to project a pattern image thereof onto the target; an image acquisition unit, in synchronization with the projection of the pattern image, configured to capture the pattern image projected onto the target on which the image is projected; and an image recognition unit configured to recognize a user interaction by using the captured pattern image.

In accordance with a third aspect of the present invention, there is provided a user interface device, which includes: a projector module configured to project an image onto a target; a pattern image generator configured to generate a laser beam having a pattern through diffraction to project a pattern image thereof onto the target; an image acquisition unit, in synchronization with the projection of the pattern image, configured to capture the pattern image projected onto the target on which the image is projected; and an image recognition unit configured to recognize a user interaction by using the captured pattern image.

### Brief Description of the Drawings

The above and other objects and features of the present invention will become apparent from the following description of embodiments, given in conjunction with the accompanying drawings, in which:
Figs. 1A and 1B illustrate how to recognize a user interaction using a wearable projection system in accordance with a related art;
Fig. 2 shows a block diagram of a user interface device in accordance with a first embodiment of the present invention;
Figs. 3A to 3C illustrate an exemplary pattern image projected onto a target;
Fig. 4 illustrates another exemplary pattern image projected onto a target;
Fig. 5A illustrates a pattern frame overlaid on an interested image at a frame time by the frame replacement unit shown in Fig. 2;
Fig. 5B exemplarily illustrates a pattern frame captured at a frame time by an image acquisition unit shown in Fig. 2;
Figs. 6A represents an event such as pressing or dragging of a finger by a user on the pattern image captured from the interested image projected on the target;
Fig. 6B represents an event such as releasing of a finger by a user on the pattern image captured from the interested image projected on the target;
Figs. 7A and 7B respectively show the change in a grid pattern of a pattern image, caused by the finger motion event of Figs. 6A and 6B;
Figs. 8A and 8B illustrate an exemplary distortion in a grid pattern of a pattern image, caused by a nonplanar or tilted target;
Fig. 9 shows an unclear grid pattern of a pattern image projected when the focus of the projector module of Fig. 2 is not adjusted;
Figs. 10A and 10B illustrate a mobile projection system in which the user interface device of Fig. 2 is incorporated;
Fig. 11 illustrates a detailed block diagram of the projector module shown in Fig. 2;
Figs. 12 and 13 illustrate examples of the projector module shown in Fig. 11;
Fig. 14 illustrates another example of the projector module shown in Fig. 11;
Figs. 15A and 15B are a flowchart for illustrating a method of recognizing a user interaction using the user interface device of Fig. 2 in accordance with the embodiment of the present invention; and
Fig. 16 shows a block diagram of a user interface
device in accordance with a second embodiment of the present invention.

### Detailed Description of the Embodiments

The advantages and features of the present invention will be clearly understood from the following embodiments taken in conjunction with the accompanying drawings. In the drawings, like or similar reference numerals denote like or similar elements throughout the specification.

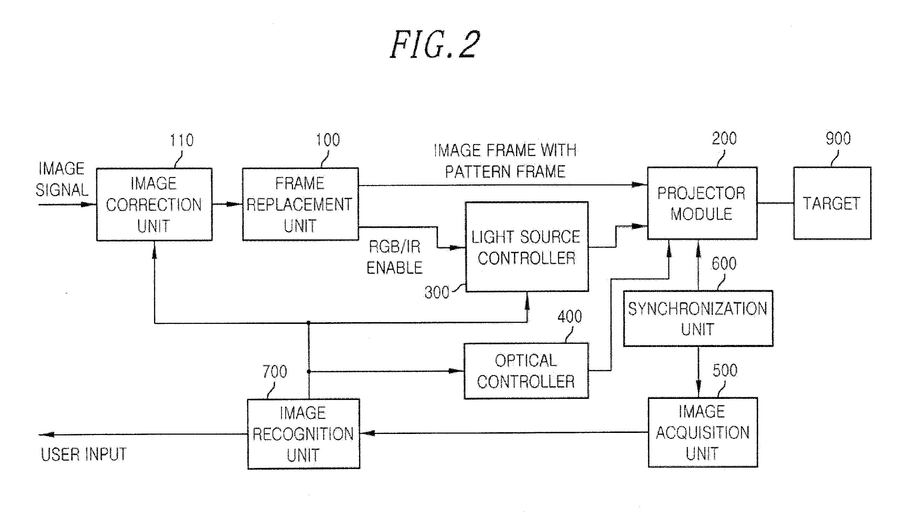

Fig. 2 illustrates a block diagram of a user interface device in accordance with a first embodiment of the present invention.

As shown, the user interface device includes a frame replacement unit 100, an image correction unit 110, a projector module 200, a light source controller 300, an optical controller 400, an image acquisition unit 500, a synchronization unit 600, an image recognition unit 700 and a target 900.

The frame replacement unit 100 replaces a frame of an input image signal by a pattern frame at a frame time. The image signal with the pattern frame is provided to the projector module 200. The projector module 200, which may be implemented with a projector, projects an image of the image signal with the pattern frame with the pattern image onto the target 900.

In the embodiment of the present invention, the target may include but not limited to a flat surface of palm, paper, book, screen and the like.

The user may touch the image projected onto the target 900 with a finger or tool to generate a user interaction for controlling a machine.

The image acquisition unit 500, which may be implemented with a still camera or an IR (Infrared ray) camera, captures a pattern image of the pattern frame from the image projected onto the target 900 at the frame time. The pattern image captured by the image acquisition unit 500 is provided to the image recognition unit 700.

Meanwhile, the synchronization unit 600 performs frame synchronization of the projector module 200 and the image acquisition unit 500 so that the image acquisition unit 500 can acquire the pattern image from the image projected onto the target 900 in synchronization with the frame time. The frame time may be a fixed time interval or a random time interval.

The image recognition unit 700 recognizes the user interaction from the pattern image captured by the image acquisition unit 500, such as a motion event of the user's finger or of a tool. Further, the image recognition unit 700 detects brightness, color and distortion of the pattern image. The detected brightness, color and distortion of the pattern image are provided to the image correction unit 110. In addition, the interaction recognition unit 700 detects a defocus of the pattern frame. Likewise, the detected defocus is provided to the optical controller 400.

The optical controller 400 controls the focus, pan, and/or tilt of the projector module 200 depending on the detected defocus to correct the focus of the image to be projected onto the target 900. Upon perceiving the detected brightness, color and distortion, the image correction unit 110 corrects the brightness, color and distortion of the image to be projected onto the target 900. The light source controller 300 controls ON/OFF switching of a light source of the projector module 200.

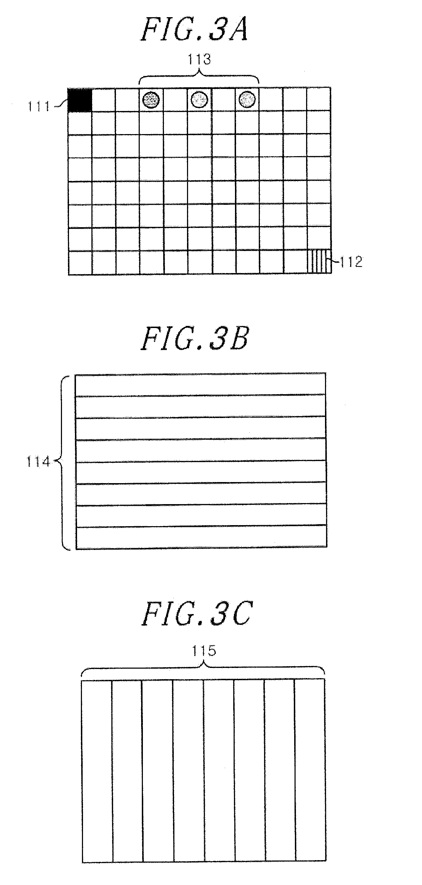

Fig. 3A illustrates an exemplary pattern image. The pattern image may include a structured light and a general-purpose image in unicolor, color or IR depending on its purpose. As shown in Fig. 3A, the pattern image projected onto the target 900 has a grid pattern. The pattern image is comprised of a start and end patterns 111 and 113 indicating the start and the end of the pattern image, respectively. In a case of a pattern image in color, it further includes an RGB color correction pixel 113 for correcting the color of the pattern image. As shown in Figs. 3B and 3C, the pattern image further includes a column index pattern 114 and a row index pattern 115.

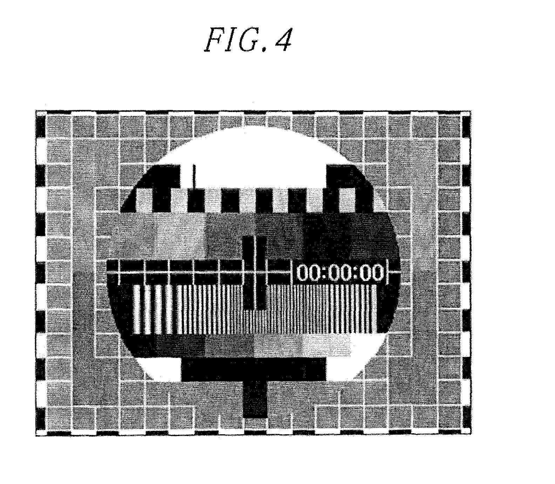

Alternatively, the pattern image may be, as shown in Fig. 4, a form of color correction screen of broadcast signals. Additionally, the pattern image may include a marker-type pattern used in the augmented reality (AR) technology.

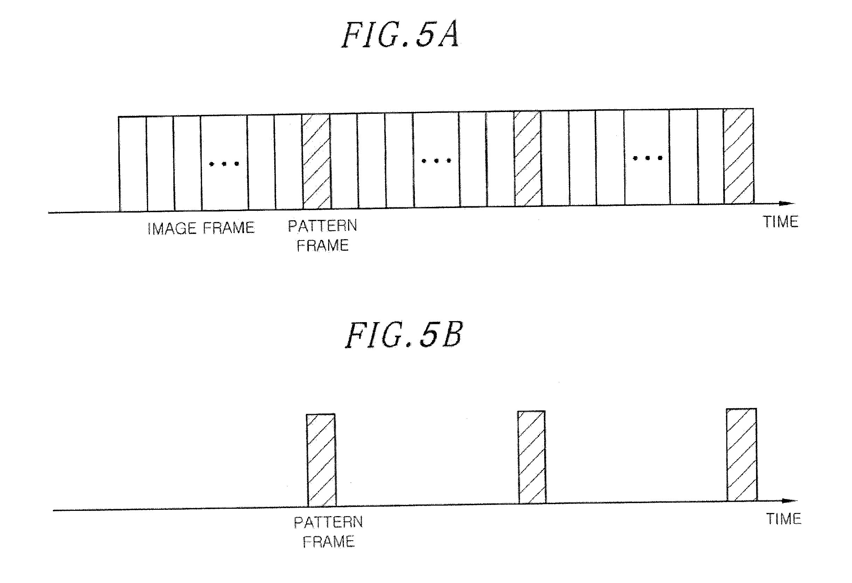

Referring to Figs. 5A and 5B, there are illustrated an example in which an image frame of the input image signal is replaced with a pattern frame at a frame time by the frame replacement unit 100, and an example of the pattern frame captured by the image acquisition unit 500 at the frame time.

As stated above, the pattern image may be a structured light and a general-purpose image in unicolor, color, or IR. The unicolor and color images have the advantage that they can be used to correct the brightness, color and distortion of the pattern image and can be utilized for a variety of RGB projectors. In addition, the unicolor and color images have the advantage of facilitating to adjust a color easily distinguish from the background.

Meanwhile, in order to prevent quality degradation of the image projected onto the target, the pattern image should be invisible to the user's eye, and thus there may be a limit on the number of pattern images to be replaced. However, if it is desired to increase the quality of the image projected onto the target and the recognition of the user interaction even though a number of pattern frames are substituted for the image frames, high-speed frame replacement technique of the pattern frames and high-speed image capturing technique may be employed.

In a case of using the IR image, it makes an image processing easier because only the IR image can be obtained by an IR camera when capturing the pattern image from the image projected on the target, and thus there is hardly any limit on the number of IR images to be replaced since they are invisible to a human eye. However, the IR image is not available for color and brightness correction, and is merely used in an IR projector having an IR light source.

According to the present invention, even if a pattern image is captured only at the frame time, it is possible to recognize a user interaction, and therefore, the amount of computation for recognition of the user interaction can be reduced.

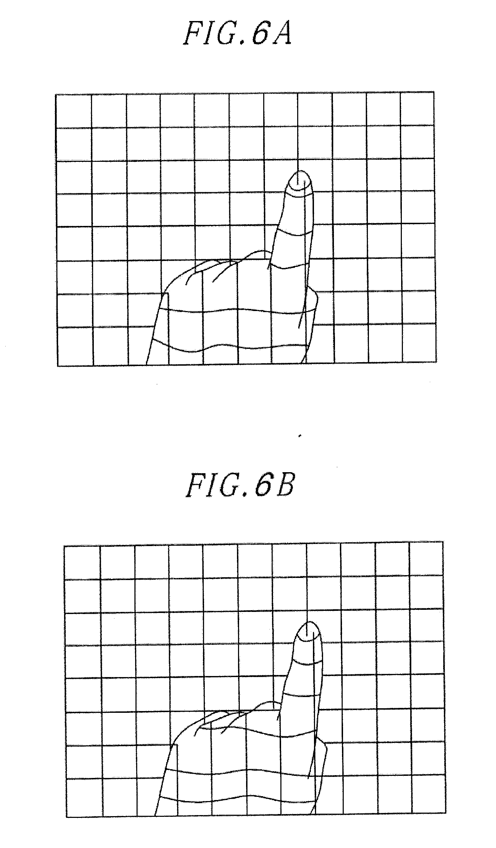

Figs. 6A and 6B illustrate the pattern image captured from the image projected on the target. In Fig. 6A, there is illustrated an event such as the pressing or dragging of a finger by a user on the pattern image, and in Fig. 6B, there is illustrated an event such as the releasing of the finger on the pattern image.

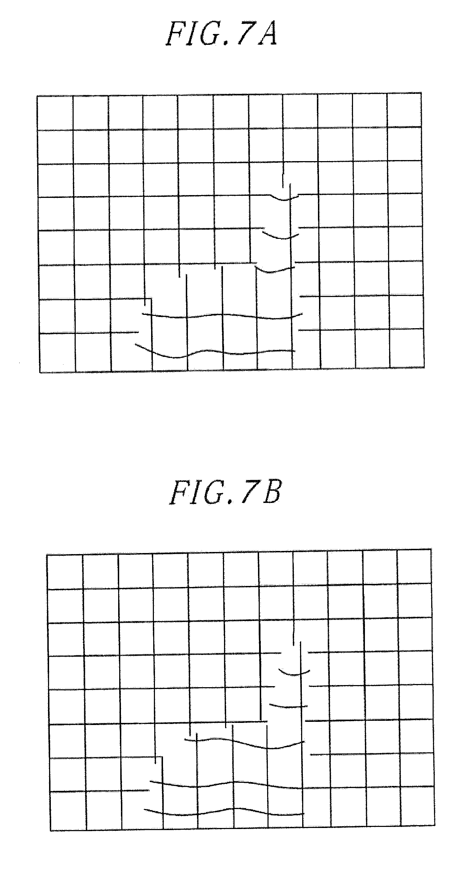

Figs. 7A and 7B respectively illustrate the change in the grid pattern of the pattern image occurred by the events performed in Figs. 6A and 6B. If the user touches the surface of the image projected onto the target 900 with a finger, there is almost no change of distortion, thickness and brightness, etc in the grid pattern of the pattern image, as shown in Fig. 7A, since the finger is placed on a coplanar to the surface of the image. On the contrary, if the user releases its finger from the surface of the image, there occurs a substantial change of the grid pattern as shown in Fig. 7B due to the distance between the finger and the surface.

As such, the image recognition unit 700 perceives the change in the grid pattern of the pattern images, acquires information on coordinates of the changed grid pattern corresponding to the position of the finger, and thus identifies the user interaction. Based on the identification, the image recognition unit 700 is able to recognize a touch, a drag, a release and the like of the finger. The user interaction so recognized can be used as a user input to control a machine such as a computing system.

Conventionally, there were deviations of recognition rates depending on skin color or surrounding environment when an event of a hand or finger motion was recognized from an image acquired by a camera. In the present invention, however, only the pattern image is captured from the image projected onto the target and the event of the hand or finger motion is identified by detecting a change in the grid pattern of the captured pattern image, which is less affected on skin color or surrounding environment. Thus, deviations of recognition rates are reduced and stable recognition results are achieved.

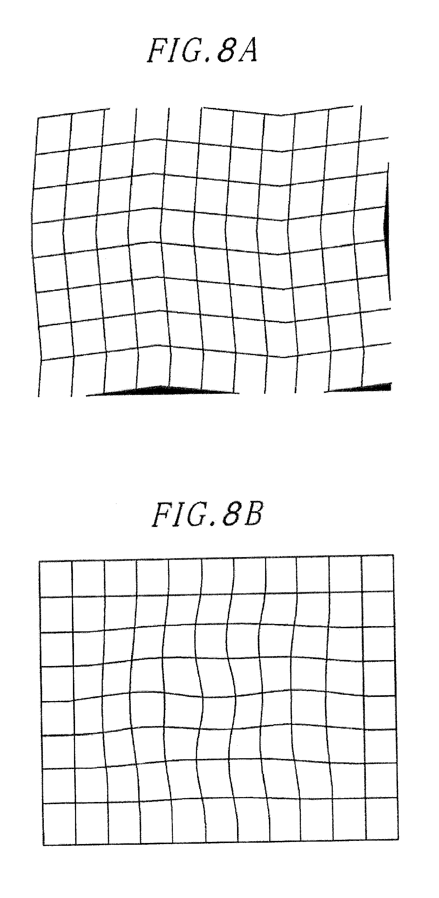

Figs. 8A and 8B show an exemplary distortion in a grid pattern of a pattern image, caused by a nonplanar or tilted target. The distorted grid pattern of the pattern image can be perceived by the image recognition unit 700 and thus the image correction unit 110 can correct the distortion of the pattern image.

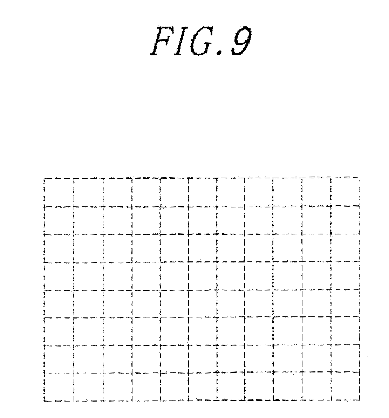

Fig. 9 shows an unclear pattern image captured when the focus of the projector module 200 is not well adjusted. Accordingly, it is possible to correct the focus of the projector module 200 under the control of the optical controller 400 until the grid pattern in the pattern image becomes clear.

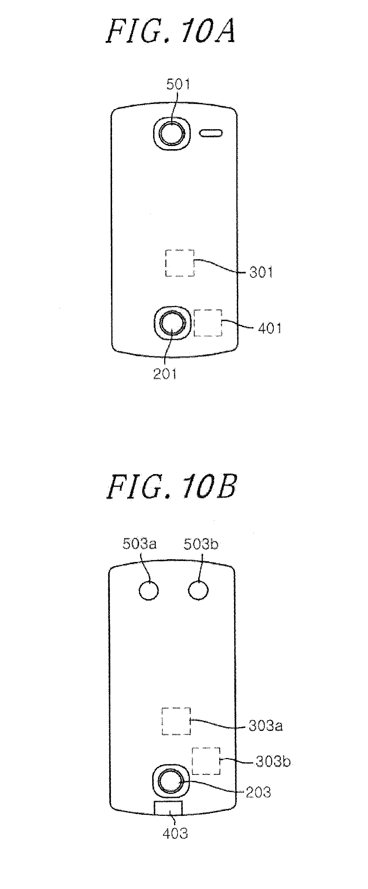

Figs. 10A and 10B illustrate embodiments of a mobile projection system in which the user interface device of Fig. 2 is incorporated.

In Fig. 10A, reference numeral 201 indicates a projector module corresponding to the projector module 200 of Fig. 2, reference numeral 301 indicates a control module corresponding to the image correction unit 110, the frame replacement unit 100 and the synchronization unit 600 of Fig. 2, reference numeral 401 indicates a focus control motor corresponding to the optical controller 400 of Fig. 2, and reference numeral 501 indicates a still camera which corresponds to the image acquisition unit 500 of Fig. 2.

In Fig. 10B, reference numeral 203 indicates a projector module corresponding to the projector module 200 of Fig. 2, reference numeral 303a indicates a control module corresponding to the image correction unit 110, the frame replacement unit 100 and the synchronization unit 600 of Fig. 2, reference numeral 303b indicates an RGB/IR light source controller which corresponds to the light source controller 300 of Fig. 2, reference numeral 403 indicates a focus control motor which corresponds to the optical controller 400 of Fig. 2, reference numerals 503a and 503b indicate a still camera and an IR camera, respectively, which correspond to the image acquisition unit 500 of Fig. 2.

A unicolor pattern image or a color pattern image can be used in the mobile projection system of Fig. 10A, and a unicolor pattern image, a color pattern image and an IR pattern image can be used in the mobile projection system of Fig. 10B.

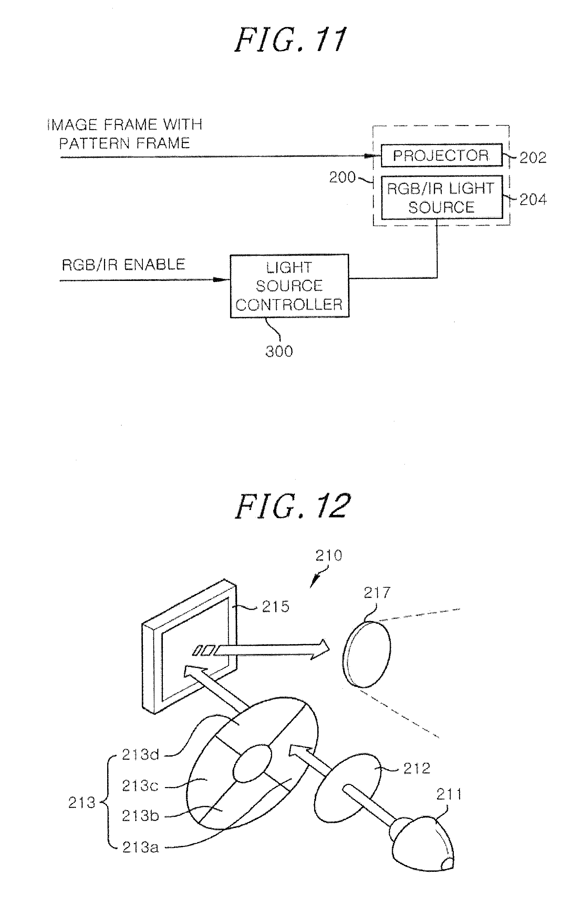

Fig. 11 illustrates a block diagram of the projector module 200 shown in Fig. 2. The projector module 200 includes a projector 202 and a light source 204. The light source controller 300 is triggered by an RGB/IR enable signal from the frame replacement unit 100 to drive the light source 204. The projector 202 then projects the image with the pattern frame onto the target 900.

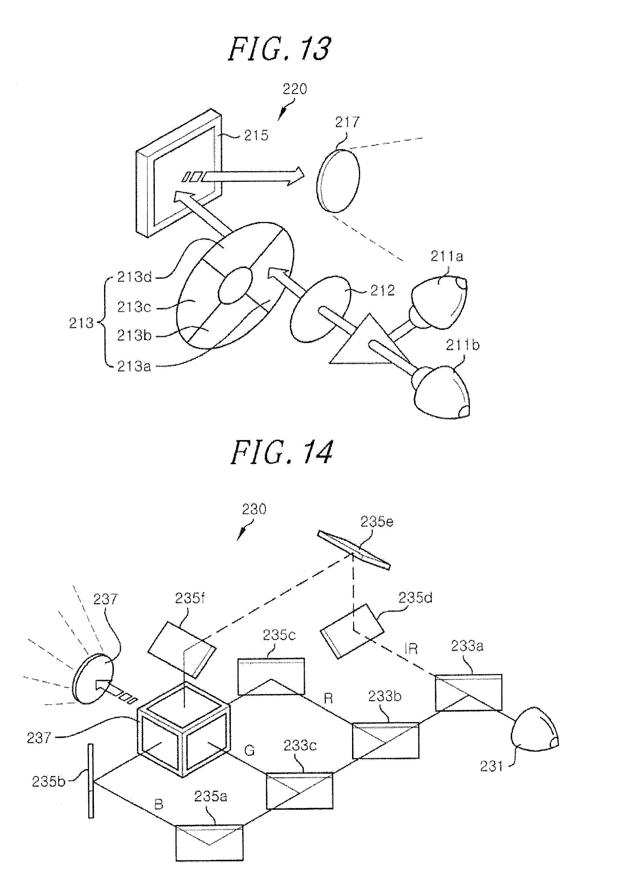

Figs. 12 and 13 illustrate examples of the projector module 200 shown in Fig. 11. In Fig. 12, the projector 202 may include a DLP projector 210 and the light source 204 may includes a combined RGB/IR light source 211 which may be integrated into the DLP projector 210. The RGB light generated from the RGB/IR light source 211 passes through an embedded lens 212 and a color wheel 213 comprised of a blue pass filter 213a, a green pass filter 213b, and a red pass filter 213c, is reflected off a digital micro-mirror device (DMD) 215, and is then projected onto a target 900 through a projection lens 217. Likewise, the IR generated from the RGB/IR source 204 under the control of the light source controller 300 passes through an embedded lens 212 and a red pass filter 213c of the color wheel 213, is reflected off a digital micro-mirror device (DMD) 215, and is then projected onto a target 900 through a projection lens 217.

In Fig. 13, the projector 202 may include a DLP projector 220. The light source 204 may includes an RGB light source 221a and an IR light source 221b which may be integrated into the DLP projector 220. The projector 202 of Fig. 13 is substantially identical to that of Fig. 12 except that the RGB light source 221a and the IR light source 221b are separated from each other and a prism 222 for refracting the light generated from each of the light sources 221a and 221b is included. The RGB light generated from the RGB light source 221a under the control of the light source controller 300 passes through the prism 222, an embedded lens 212, and a color wheel 223 comprised of a blue pass filter 223a, a green pass filter 223b, a red pass filter 223c, and an infrared pass filter 223d, is reflected off a DMD 215, and is then projected onto a target 900 through a projection lens 217. Likewise, The IR generated from the IR light source 221b under the control of the light source controller 300 passes through the prism 222, an embedded lens 212, and an infrared pass filter 223d of the color wheel 223, is reflected off a DMD 215, and is then projected onto a target 900 through a projection lens 217.

Fig. 14 illustrates another example of the projector 200 shown in Fig. 11. In Fig. 14, the projector 200 may include a 3-LCD projector 230 and the light source 204 may include a combined RGB/IR light source 231. The RGB light generated from the RGB/IR light source 231 under the control of the light source controller 300 is separated into red, green, and blue lights by dichroic mirrors 233a, 233b, and 233c for three red, green, and blue colors, passes through a prism 237 and a projection lens 238, and is then recombined and projected onto the target 900. Unexplained reference numerals 235b and 235c indicate reflecting mirrors. Likewise, the IR generated from the RGB/IR light source 231 under the control of the light source controller 300 passes through a dichroic mirror 233a, reflecting mirrors 235d, 235e, and 235f, the prism 237, and the projection lens 238, and is projected onto the target 900.

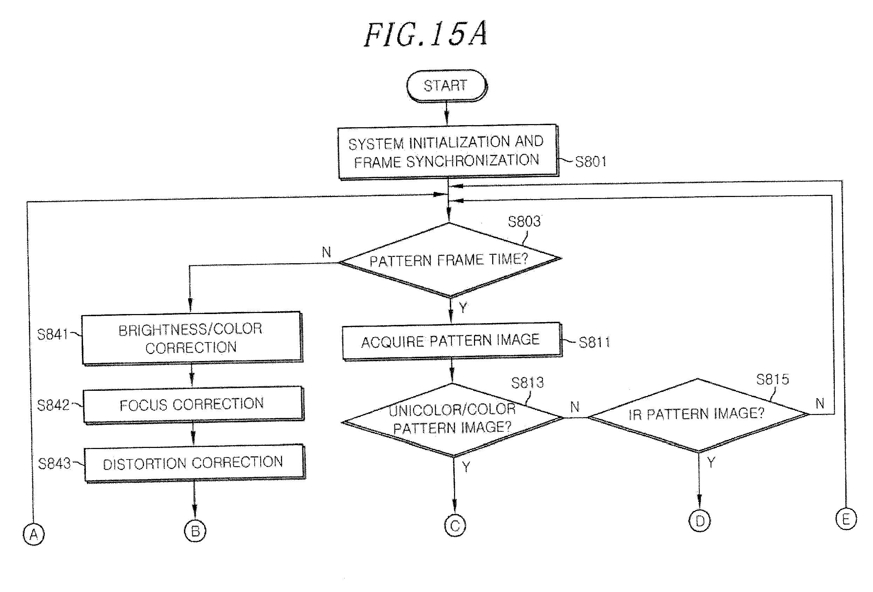

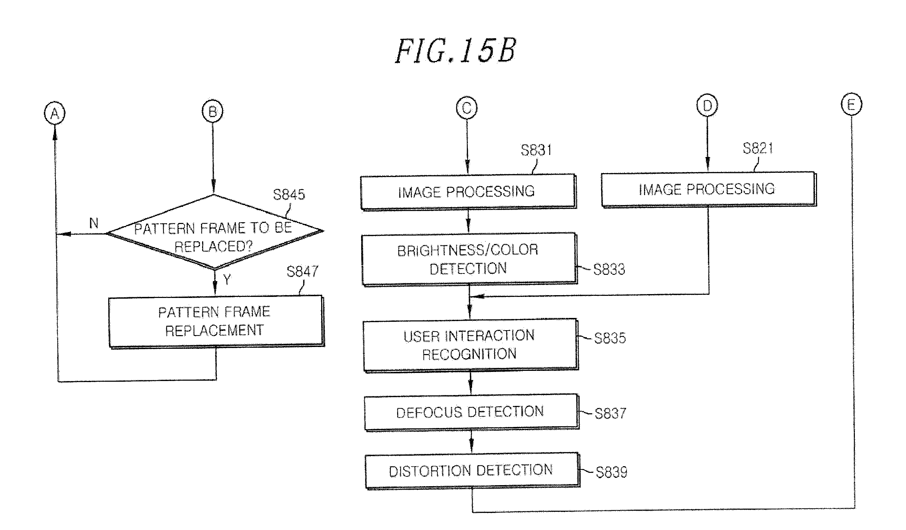

Figs. 15A and 15B show a flowchart for explaining a method for recognizing a user interaction using the user interface device in accordance with the embodiment of the present invention.

First, in step S801, the user interface device is initialized, and frame synchronization of the projector module 200 and the image acquisition unit 500 is performed by the synchronization unit 600.

In step S803, the image acquisition unit 500 checks whether it is a frame time. As a result of checking, if it is the frame time, the method proceeds to step S811 in which the image acquisition unit 500 captures the pattern image from the image projected onto the target 900.

Next, it is determined whether the pattern image is a unicolor/color pattern image in step S813. If the pattern image is determined to be a unicolor/color pattern image, the method proceeds to step S831 through a tab 'C', and otherwise, the method goes to step S815.

Thereafter, in step S831, the pattern image is undergone an image processing, and the brightness and color of the pattern image is detected by the image recognition unit 700. The detected brightness and color of the pattern image is then provided to the light source controller 300, and the method then proceeds to step S835.

Meanwhile, if the pattern image is determined to be an IR pattern image in step S815, the method proceeds to step S821 through a tab 'D' where the IR pattern image is subjected to an image processing.

In step S835, the image recognition unit 700 recognizes a user interaction through the pattern image. For instance, the user interaction can be recognized by detecting the change in the grid pattern of the pattern image caused by an event, such as a user's finger motion.

Further, the focus and distortion of the pattern image are also detected from the pattern image in respective steps S837 and S839, and the detected focus and distortion are provided to the optical controller 400 and the image correction unit 110. Thereafter, the method returns to step S803 through a tab 'E'.

In step S803, it is determined that now is not the frame time, the method goes to step S841. In step S841, the image correction unit 110 corrects the brightness and color of the image to be projected onto the target 900.

Next, in step S842, under the control of the optical controller 400, the projector module 200 is controlled depending on the detected focus to correct the focus of the image to be projected onto the target 900. In addition, in step S843, the image correction unit 110 corrects the distortion of the image to be projected onto the target 900 depending on the detected distortion. After that, the method advances to step S845 through a tab 'B'.

Subsequently, in step S845, it is determined whether a pattern image is required for recognizing the user interaction. If so, in step S847, a frame of the input image signal is replaced by a pattern frame at the frame time, and the image signal with the pattern frame is provided to the projector module 200. Then, the image of the image signal is projected onto the target 900 by the projector module 200 in synchronization with the frame replacement unit 100. The method returns to step S803 for repeatedly performing the above processes.

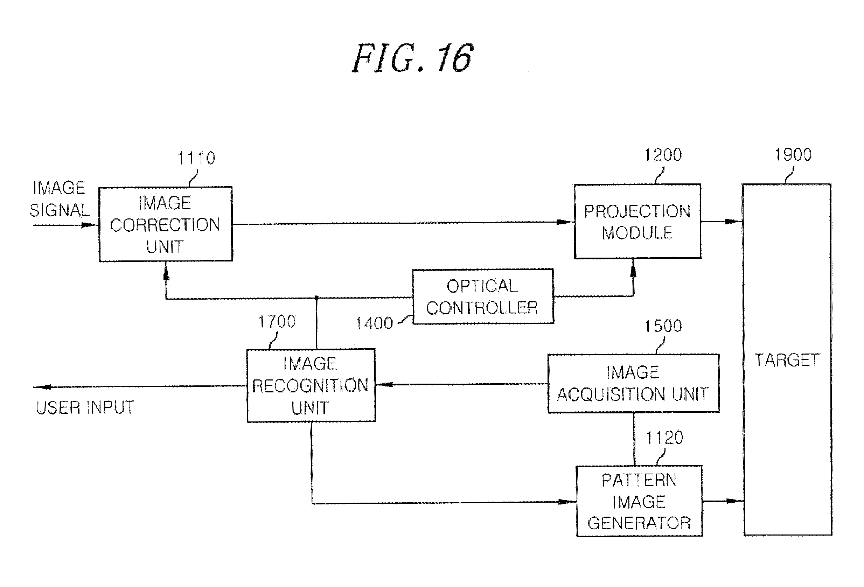

Fig. 16 shows a block diagram of a user interface device in accordance with a second embodiment of the present invention. The configuration of the second embodiment is substantially identical to that of the first embodiment except that a pattern image projected onto a target using a laser instead of employing a light source unlike the first embodiment. Therefore, a detailed description of the same components as those in the first embodiment will be omitted for the sake of simplicity.

As shown in Fig. 16, the user interface device includes an image correction unit 1110, a pattern image generator 1120, a projector module 1200, an optical controller 1400, an image acquisition unit 1500, an image recognition unit 1700 and a target 1900.

The projector module 1200, which may be implemented with a projector, projects an image of an input image signal onto the target 1900. The pattern image generator 1120, which may include a laser projection module and a diffraction grating, generates a laser beam having a pattern passing through the diffraction grating to project a pattern image at a frame time onto the target 1900. The pattern image generator 1120 may generate a pattern image of various types depending on the diffraction grating as well as the pattern image of the grid pattern as in the first embodiment.

The image acquisition unit 1500, which may be implemented with an IR camera, captures the pattern image projected onto the target 1900 on which the subject image is projected, in synchronization with the frame time. The pattern image captured by the image acquisition unit 1500 is provided to the image recognition unit 1700.

The image recognition unit 1700 recognizes the user interaction from the pattern image captured by the image acquisition unit 1500, such as a motion event of the user's finger or of a tool. Further, the image recognition unit 1700 detects brightness, color, distortion and focus of the pattern image. The detected brightness, color, and distortion of the pattern image are provided to the image correction unit 1110 and the detected focus is provided to the optical controller 1400.

The image correction unit 1110 corrects the image to be projected onto the target 1900 depending on the detected brightness, color, and the optical controller 1400 controls an optical system in the projector module 1200 to correct the focus of the image to be projected onto the target 1900.

As described above, in accordance with the embodiment of the present invention, the user can interact with a bare hand and low computation is needed for recognition of the interaction, thus consuming a short time to process an interaction and accordingly offering a fast response time.

In addition, the use of a pattern image enables it to achieve high recognition performance with respect to skin color and surrounding light.

Also, the brightness, color, and focus of the projector can be corrected fast and the projected image can be quickly and precisely matched to a particular space such a screen without any distortion.

The present invention as described above is applicable to a mobile device equipped with a projector and a camera, as well as to a projector system such as a projection computer. In particular, the present invention is even more applicable in a mobile device or wearable system subject to severe changes of surrounding environments, such as peripheral light amount, lighting, wobbling, etc, or in a small-sized embedded system requiring a low computation technique.

While the invention has been shown and described with respect to the particular embodiments, it will be understood by those skilled in the art that various changes and modification may be made without departing the scope of the present invention as defined in the following claims.

## Claims

1. A user interface device comprising:
a frame replacement unit configured to replace a frame of an input image signal by a pattern frame at a frame time;
a projector module configured to project an image of the image signal with the pattern frame onto a target;
an image acquisition unit configured to capture a pattern image of the pattern frame from the image projected onto the target; and
an image recognition unit configured to recognize a user interaction by using the captured pattern image.

2. The user interface device of claim 1, wherein the pattern image includes a general-purpose image in unicolor and color and a constructed light in unicolor and color.

3. The user interface device of claim 1, wherein the pattern image includes an infrared image.

4. The user interface device of any one of claims 1, 2 and 3, wherein the pattern image has a grid pattern.

5. The user interface device of claim 4, wherein the image recognition unit detects the change in the grid pattern of the pattern image caused by a motion event on the image projected onto the target to recognize the user interaction.

6. The user interface device of one of claims 1 to 5, wherein the image recognition unit is further configured to detect a focus of the pattern image, and
the user interface device further comprises an optical controller configured to control the projector module to correct the focus of the projector module depending on the detected focus.

7. The user interface device of one of claims 1 to 6, wherein the image recognition unit is further configured to detect brightness, color and distortion of the pattern image, and
the user interface device further comprises an image correction unit configured to correct the brightness, color and distortion of the image to be projected onto the target depending on the detected brightness, color and distortion.

8. A method for recognizing a user interaction, the method comprising:
replacing a frame of an input image signal by a pattern frame at a frame time;
projecting an image of the image signal with the pattern frame onto a target;
capturing a pattern image of the pattern frame from the image projected onto the target; and
recognizing the user interaction by using the captured pattern image.

9. The method of claim 8, wherein the pattern image includes a general-purpose image in unicolor and color and a structured light in unicolor and color.

10. The method of claim 8, wherein the pattern image includes an infrared image.

11. The method of any one of claims 8, 9 and 10, wherein the pattern image has a grid pattern.

12. The method of claim 11, wherein said recognizing the user interaction comprises detecting the change in the grid pattern of the pattern image caused by a motion event on the image projected on the target.

13. A user interface device comprising:
a projector module configured to project an image onto a target;
a pattern image generator configured to generate a laser beam having a pattern through diffraction to project a pattern image thereof onto the target;
an image acquisition unit, in synchronization with the projection of the pattern image, configured to capture the pattern image projected onto the target on which the image is projected; and
an image recognition unit configured to recognize a user interaction by using the captured pattern image.

14. The user interface device of claim 13, wherein the pattern image generator includes a laser module to project the laser beam and a diffraction grating to pass the laser beam therethrough.

15. The user interface device of claim 13 or 14, wherein the image recognition unit detects the change in the pattern of the pattern image caused by a motion event to recognize the user interaction.
